# EUROPEAN PATENT APPLICATION

(11) **EP 1 162 543 A2**
(43) Date of publication of application: **12.12.2001**
(21) Application number: 01304940.8
(22) Date of filing: 06.06.2001
(51) Int. Cl.: G06F 13/28

(54) **A system for transferring data reusing a plurality of data transferring area cyclically**

(30) Priority: 07.06.2000 JP 2000175536
(71) Applicant: Hitachi Ltd., Tokyo (JP); TTPCOM Limited, Royston, Hertfordshire, SG8 6EE (GB)
(72) Inventor: Kamimaki, Haruo, c/o Hitachi Ltd., Tokyo 100-8220 (JP); Aida, Kosaku, c/o Hitachi Ltd., Tokyo 100-8220 (JP); Kiuchi, Atsushi, c/o Hitachi Ltd., Tokyo 100-8220 (JP); Nakatgawa, Tetsuya, c/o Hitachi Ltd., Tokyo 100-8220 (JP); Talmage, Dan, c/o TTPCOM Limited, Royston, Herts SG8 6EE (GB)
(74) Representative: Calderbank, Thomas Roger

(57) **Abstract**

A data transfer controller is provided which can reduce a CPU control load necessary for data transfer cyclically using a plurality of data transfer areas. A DMAC (3) constituting the data transfer controller is initially set with a transfer start address of a transfer source or transfer destination by a CPU (2), issues an interrupt (110, 111, 104) to CPU each time the data transfer responding to a transfer request from the transfer source reaches a predetermined data amount based upon the transfer start address, and initializes an address of the transfer source or transfer destination to the transfer start address each time the interrupt is issued predetermined plural times. After CPU sets once the data transfer conditions to DMAC, CPU can continue data processing by repetitively using a limited number of memory areas (MA, MB), without performing any process of repetitively setting the data transfer conditions necessary for a data transfer control for receiving voice data.

## Description

The present invention relates to data transfer control techniques for a data transfer controller such as DMAC (direct memory access controller) and for a microcomputer or the like with a built-in data transfer controller, the techniques being effective, for example, for application to data buffering during layer processing and voice encoding and decoding of a mobile phone.

In a conventional DMAC, an arithmetic and logic controller sets initially a transfer source address, a transfer destination address, the number of transfer words (the number of transfer times), and in response to a transfer request, a data transfer operation starts in accordance with the initially set conditions. For data transfer in a dual addressing mode such as data transfer between memories, the transfer source and destination addresses are renewed for each data transfer operation to sequentially execute the transfer of data having the designated number of transfer words. For data transfer in a single addressing mode such as data transfer between a memory and a peripheral circuit, the transfer source and destination addresses are renewed for each data transfer operation to sequentially execute the transfer of data having the designated number of transfer words.

The arithmetic and logic controller such as a CPU can execute data processing while DMAC takes over a data transfer control. For example, in a data processor having, as its operation target, voice codec (voice coding and decoding processing) for a GSM (Global System For Mobile Communication) mobile phone, in parallel with a DMAC operation of storing voice data to be transmitted in a data buffer, CPU can execute a process of encoding the voice data already stored in the data buffer.

The present inventor has studied data transfer control by DMAC in connection with a process such as voice codec for a mobile phone of GSM or the like.

For example, voice data is sampled at 8 kHz and sequentially transferred to a data processor which in turn stores the sampled data in a memory under control of DMAC. A voice compression process is executed by handling voice data of 160 samples as one lump of voice data. Since voice data is supplied even during the voice compression process, this voice data is required to be stored without deleting it under the vice compression process. As a countermeasure against this, two memory areas for storing voice data are prepared, and each time voice data of 160 samples is stored, the data transfer control conditions of DMAC are changed to thereby buffer data alternately in two memory areas.

With this approach, however, CPU of the data processor is required to execute a process of changing the data transfer control conditions of DMAC before each voice compression process, and the process amount of CPU increases correspondingly, as the present inventor has elucidated.

As described above, data is sequentially received and stored in a memory or the like, and each time a predetermined amount of data is received, data processing or the like is performed in parallel with the data storing process, by using already stored data. With this process of using the predetermined amount of data as one group, it is necessary to hold the data until the data processing is completed and to prepare a buffer having at least two areas. It is necessary to continue data storing by using one buffer area while data stored in the other buffer area is processed. In order to buffer data alternately in two storage areas, the data transfer control conditions of DMAC are required to be changed.

In this case, buffer areas may be alternately switched by setting a start address of one data buffer to DMAC each time data transfer to the other data buffer is completed. If data is made to be continuously transferred to a plurality of buffer areas, it is sufficient that the data transfer control conditions are set repetitively to DMAC each time data transfer to the plurality of buffer areas is completed. For example, if a buffer having two buffer areas is used, it is sufficient that each time data is stored in the two buffer areas, the data transfer conditions are set again. The CPU load of setting the data transfer conditions is therefore halved. DMAC capable of continuous data transfer to a plurality of buffer areas is described, for example, in JP-A-5-20263 (which corresponds to U.S. Patent 5,325,489).

In order to make CPU start data processing or the like by notifying CPU of data storage completion in one buffer, DMAC issues an interrupt request to CPU each time data storage in one buffer is completed. As technologies analogous to such an interrupt approach, JP-A-1-216456 describes that in DMA transfer from a magnetic disk drive to a main storage, an interrupt signal is issued to CPU each time data of one sector is transferred, and in response to this interrupt signal, CPU executes data processing.

Even with the above-described techniques capable of continuous data transfer to a plurality of storage areas, however, a CPU load of setting the data transfer control conditions is only halved in the case of a two-area buffer. In order to further reduce the CPU load, it is necessary to increase the number of buffers. By considering limitation of resources, the above-described techniques have a limit as the present inventor has elucidated.

It is an object of the invention to provide a data transfer controller capable of reducing a control load necessary for data transfer cyclically utilizing a plurality of data transfer areas.

It is another object of the invention to provide a data processor capable of reducing a process load of CPU or the like for setting data transfer control conditions during a series of processes of sequentially receiving and storing data in a memory or the like, and processing already stored data each time a predetermined amount of data is stored, in parallel with a next data storing process.

It is still another object of the invention to improve a data processing efficiency of a data processing system which performs a series of processes of sequentially receiving and storing data in a memory or the like, and processing already stored data each time a predetermined amount of data is stored, in parallel with a next data storing process.

The above and other objects and novel features of the present invention will become apparent from the description of the specification when read in conjunction with the accompanying drawings.

The description of aspects of the present invention disclosed in this application will be given as below.
[1] A data transfer controller has an initial value register, a transfer start address of a transfer source or transfer destination being initially set to the initial value register from an external. Control means of the data transfer controller requests an interrupt to the external each time data transfer responding to a transfer request from the external reaches a predetermined data amount based upon the transfer start address, and initializes an address of the transfer source or transfer destination to the transfer start address in the initial value register each time the interrupt is issued a plurality of predetermined times.
   A data processor using the data transfer controller includes an arithmetic and logic controller such as a CPU in addition to the data transfer controller respectively formed on a semiconductor chip.
   A data processing system using the data transfer controller includes an arithmetic and logic controller, a RAM accessible by the arithmetic and logic controller and the data transfer controller, and a peripheral circuit which issues a transfer request to the data transfer controller. The data transfer controller requests an interrupt to the arithmetic and logic controller each time data transfer to the RAM responding to a transfer request from the peripheral circuit reaches a predetermined data amount based upon a transfer start address of the RAM indicated by the transfer control conditions set by the arithmetic and logic controller, and initializes an address of the transfer source or transfer destination to the transfer start address each time the interrupt is issued a plurality of predetermined times. After the interrupt from the data transfer controller is acknowledged, the arithmetic and logic controller reads data transferred to the RAM before the interrupt is issued, and performs data processing.
   With this structure, since the interrupt is issued each time a data transfer of a predetermined amount is completed, the arithmetic and logic controller such as a CPU can perform data processing by reading data from a data area for which the data transfer of the predetermined amount has been completed. In parallel with this operation, the data transfer controller can continue the transfer control of storing data in the next area, without any control by the arithmetic and logic controller such as a CPU.
   Furthermore, an address of the transfer source or transfer destination in the initial value register is initialized to the transfer start address each time the interrupt is issued a plurality of predetermined times. Therefore, for the data transfer control cyclically using a limited number of data areas, the arithmetic and logic controller such as a CPU is released from a load of setting repetitively the transfer control conditions. In other words, even without using a number of continuous data areas and by using only limited resources, the load of setting repetitively the transfer control conditions by the arithmetic and logic controller such as a CPU can be reduced, and it is possible to continue data transfer and data processing in parallel without any interception. For example, using only a two-area buffer can provide the above effects.
   Still further, as described above, the data transfer controller automatically performs a process of switching between a plurality of data areas and cyclically setting the transfer control conditions. Accordingly, the arithmetic and logic controller can perform other processes corresponding in amount to a reduction of the load of the data transfer control, contributing to an improvement on a data processing efficiency of the whole data processing system.
[2] A data transfer controller according to another aspect of the invention, comprises: an initial value register capable of being externally set with transfer control address information; address counting means for renewing the transfer control address information each time data is transferred from a transfer source to a transfer destination; a temporary address register to which the transfer control address information set to the initial value register is set, the set transfer control address information being sequentially renewed by the address counting means; transfer number counting means capable of repetitively performing an operation of counting the number of transfer times up to a first target number each time data is transferred from the transfer source to the transfer destination; repetition number counting means capable of repetitively performing an operation of counting the number of repetition times of the operation of the transfer number counting means for counting the number of transfer times up to the first target number, up to a second target number; and control means for starting a data transfer operation from the transfer source to the transfer destination in response to a data transfer request, outputting an interrupt signal each time the transfer number counting means counts the first target number, and setting the transfer control address information to the temporary register from the initial value register each time the repetition number counting means counts the second target number.
   In the data transfer controller, if a memory address is used as the transfer destination address in the single addressing mode, the temporary address register is a destination address register for storing a transfer destination address. In this case, the initial value register is an initial address register to which a start address of the transfer destination is set. The control means starts a data transfer control of storing data at the transfer source address in the transfer destination at a transfer destination address in the destination address register, in response to the data transfer request. The control means outputs the interrupt signal each time the number of data transfer times reaches the first target number, and makes the initial value in the initial address register be loaded in the destination address register each time the repetition number counting means counts the second target number. Accordingly, once the initial value is set to the initial address register, the control of transferring data to a plurality of data areas in the single addressing mode can thereafter automatically repeated.
   In the data transfer controller, if a memory address is used as the transfer source address in the single addressing mode, the temporary address register is a source address register for storing a transfer source address. The initial value register is an initial address register to which a start address of the transfer source is set. The control means starts a data transfer control of storing data at the transfer source address in the source address register, in the transfer destination at a transfer destination address, in response to the data transfer request. The control means outputs the interrupt signal each time the number of data transfer times reaches the first target number, and makes the initial value in the initial address register be loaded in the source address register each time the repetition number counting means counts the second target number. Accordingly, once the initial value is set to the initial address register, the control of transferring data to a plurality of data areas in the single addressing mode can thereafter automatically repeated.
   In the data transfer controller, in order to realize the cyclic data transfer control in the single addressing mode relative to both of the source address and destination address, the control means selects either the source address register or the destination address register as the temporary address register and starts a data transfer control by using the register selected as the temporary register, in response to the data transfer request.
   The first target number defines the size of one data area. Therefore, by providing a transfer number designation register capable of being externally set with the first target number, the degree of freedom of the transfer control can be increased.
   The second target number corresponds to the total number of data areas used for the data transfer. If a two-area buffer is used, the second target number of two, whereas if a three-area buffer is used, the second target number is three. If the three-area buffer is used, while data is transferred to one data area, data already transferred to and stored in the two data areas can be processed. For example, in a short term prediction process using encoding coefficients of voice data in each data area, when data in the data area is to be encoded, it is necessary to use some data in one preceding data area already encoded. In such a case, if the data in the two data areas including the data area already encoded is left, data necessary for the short term prediction process can be easily and reliably acquired.
[3] In order to utilize discontinuously address mapped data areas, a data transfer controller is provided with a plurality of initial value registers and selecting means capable of selecting the transfer control address information stored in one of a plurality of the initial value registers. The transfer control address information selected by the selecting means is set to the temporary register and sequentially renewed by the address counting means. The control means starts a data transfer operation from the transfer source to the transfer destination in response to a data transfer request, outputs an interrupt signal each time the transfer number counting means counts the first target number, makes the selecting means select the initial value register in accordance with a count of the repetition number counting means, and sets the transfer control address information in the selected initial register to the temporary register.
   In this manner, it becomes possible to perform the data transfer by sequentially switching between a plurality of discontinuous data areas, starting from the transfer control address information initially set to the respective initial value registers.
[4]A data processor according to another aspect of the invention has the above-described data transfer controller together with an arithmetic and logic controller.
   The data processor may have a RAM accessible by the arithmetic and logic controller and the data transfer controller, the arithmetic and logic controller, the data transfer controller and the RAM being formed in a single semiconductor chip. The data processor may also have a peripheral input/output circuit accessible by the arithmetic and logic controller and the data transfer controller, the peripheral input/output circuit being capable of outputting the data transfer request to the data transfer controller.
   A data processing system using the data processor has a voice signal input circuit connected to the peripheral input/output circuit of the data processor, wherein: the data processor stores an operation program for the arithmetic and logic controller; in accordance with the operation program, the arithmetic and logic controller sets transfer conditions to the data transfer controller, the transfer conditions being used when a voice signal input from the voice signal input circuit to the peripheral input/output circuit is transferred to the RAM; the data transfer controller controls to transfer the voice signal to the RAM in response to the data transfer request from the peripheral input/output circuit; and when an interrupt signal is received from the data transfer controller, the arithmetic and logic controller read the voice signal from the RAM and processes the read voice signal.

### IN THE DRAWINGS:

Fig. 1 is a block diagram showing an example of a data processor according to the invention.

Fig. 2 is a block diagram showing a first example of DMAC specifically dedicated to a single addressing mode in which a transfer source address is fixed and a transfer destination address is sequentially renewed.

Fig. 3 is a diagram illustrating a relation between the number of transfer times and a two-area buffer.

Fig. 4 is a diagram illustrating the overall data transfer operation by DMAC shown in Fig. 2.

Fig. 5 is a block diagram showing an example of a GSM mobile phone system to which a data processor is applied.

Fig. 6 is a diagram showing an example of the operation of the mobile phone system shown in Fig. 5 in which while a digital voice signal output from an A/D converter is stored in a memory via SCI of a peripheral circuit, the digital voice signal is encoded.

Fig. 7 is a block diagram showing a second example of DMAC specifically dedicated to the single addressing mode and being capable of using a desired memory area.

Fig. 8 is a diagram illustrating the operation of DMAC shown in Fig. 7.

Fig. 9 is a diagram showing an example of memory areas.

Fig. 10 is a block diagram showing a third example of DMAC specifically dedicated to the single addressing mode and allowing a two-area buffer to be selected either as a transfer source or as a transfer destination.

Fig. 11 is a block diagram showing a fourth example of DMAC specifically dedicated to the single addressing mode.

Fig. 12 is a block diagram showing a fifth example of DMAC specifically dedicated to the single addressing mode and being capable of data transfer control by utilizing a three-area buffer.

Fig. 13 is a diagram showing an example of a data transfer control operation by DMAC shown in Fig. 12.

Fig. 14 is a diagram showing an example of a three-area buffer.

Fig. 15 is a diagram illustrating a relation between data to be encoded and data necessary for a short term prediction process.

Fig. 16 is a diagram illustrating an advantage obtained by a short term prediction process using a three-area buffer.

Embodiments of the invention will be described in detail with reference to the accompanying drawings.

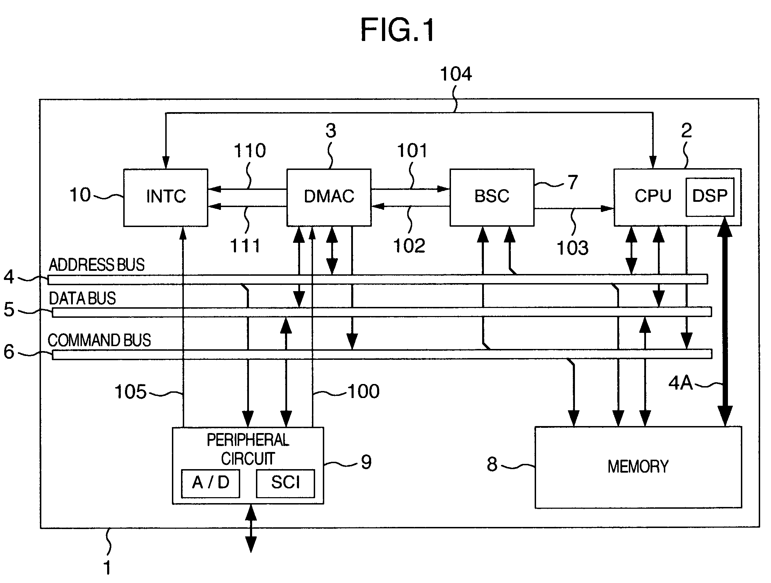

Fig. 1 shows an example of a data processor according to the invention. A data processor 1 shown in Fig. 1 has an arithmetic and logic controller 2 as a bus master module and a direct memory access controller (DMAC) 3. The arithmetic and logic controller 2 and DMAC 3 share an address bus 4, a data bus 5 and a command bus 6. Bus privilege arbitration is performed by a bus state controller 7 which controls the states of buses.

The arithmetic and logic controller (hereinafter simply called a CPU where applicable) 2 has an instruction control unit for fetching an instruction and analyzing it and an arithmetic unit whose operation is controlled by the instruction control unit. Although not specifically limited, the arithmetic unit has an integer arithmetic unit and a digital signal processor (DSP), the former having an integer operation unit and a general register and the latter having a product sum operation unit and a product sum operation register. Although not specifically shown, CPU 2 may further include an accelerator specifically dedicated to processing and arithmetic operation of particular signals.

An operation program of CPU 2 may be supplied from a ROM built in the data processor 1, or the data processor 1 may use an external program ROM. A predetermined area of a RAM constituting a memory 8 may be used as an application program area.

The memory 8 made of an SRAM (static random access memory) or a DRAM (dynamic random access memory) is used for the operation of the integer arithmetic unit and DSP. The memory 8 has a dual port as access ports, one connected to the buses 4, 5 and 6 and the other connected DSP of CPU 2 via a digital signal processing bus 4A. The dual port realizes a perfect parallel access. The digital signal processing bus 4A includes an address line, a data line and a control line.

The data processor 1 also has a peripheral circuit 9, an interrupt controller 10 and the like. The peripheral circuit is a collective name for all of an analog/digital (A/D) converter for converting an externally supplied analog signal into a digital signal, a serial communication interface (SCI) controller, and the like.

Although not specifically limited, DMAC 3 has a single addressing mode as a data transfer mode. CPU 2 sets beforehand the transfer control conditions such as a transfer start address to DMAC 3. In response to a transfer request signal 100 from the peripheral circuit 9, data transfer control by DMAC 3 is activated.

Upon reception of a data transfer request by the data transfer request signal 100, DMAC 3 outputs a bus privilege request signal 101 to BSC 7 to request a bus privilege. Upon reception of a bus privilege request from DMAC 3, BSC 7 monitors the use states of the buses 4, 5 and 6, and if the buses 4, 5 and 6 are not busy, it outputs a bus privilege acknowledge signal 102 to DMAC to give DMAC 3 a bus privilege. At this time, CPU 2 is notified of a bus busy state by using a bus busy signal 103.

Upon reception of the bus privilege acknowledge signal 102, DMAC 3 outputs, for example, a transfer source address (address of a register in the peripheral circuit 9 or the like) to the address bus 4, and at the same time outputs a read command to the command bus 6. It is needless to say that instead of outputting a transfer source address, a module select signal for selecting the peripheral circuit of a transfer source may be output to the transfer source.

Upon reception of the transfer source address and read command via the address bus 4 and command bus 6, the peripheral circuit 9 outputs data to the data bus 5. Synchronously with the timing when the read data is established on the data bus 5, DMAC 3 outputs, for example, an address of the memory 8 as a transfer destination to the address bus 4, and at the same time it outputs a command representative of a write process to the command bus 6. The memory 8 stores data on the data bus 5 in a memory area addressed by the address supplied via the address bus 4. Each time DMAC 3 executes one data transfer operation, it renews the transfer destination memory address to the next transfer destination address.

As described above, each time the peripheral circuit 9 issues a transfer request, DMAC 3 performs an operation of transferring data from the peripheral circuit 9 to the memory 8 in the single addressing mode. Although the details will be given later, each time the data transfer operation responding to a transfer request from the peripheral circuit 9 based upon a transfer start address reaches a predetermined data amount, DMAC 3 alternately outputs interrupt request signals 110 and 111 to the interrupt controller 10 which in turn outputs an interrupt signal 104 to CPU 2. Each time the interrupt is performed a plurality of predetermined times, e.g., twice, by using the interrupt request signals 110 and 111, DMAC 3 initializes the transfer destination memory address to the transfer start address.

If another interrupt request signal 105 is supplied from the peripheral circuit 9 to the interrupt controller 10 and there is a conflict of interrupt requests, the interrupt controller 10 performs a priority control based upon an interrupt priority order or the like or performs an interrupt nest control to thereby arbitrate interrupt requests to CPU 2. It is obvious that the peripheral circuit 9 becomes a transfer destination device depending upon the initially set transfer control conditions. In this case, DMAC 3 functions in a manner similar to that described above, excepting that the transfer source address is sequentially renewed. Therefore, in the example shown in Fig. 1, the detailed description of such a case is omitted.

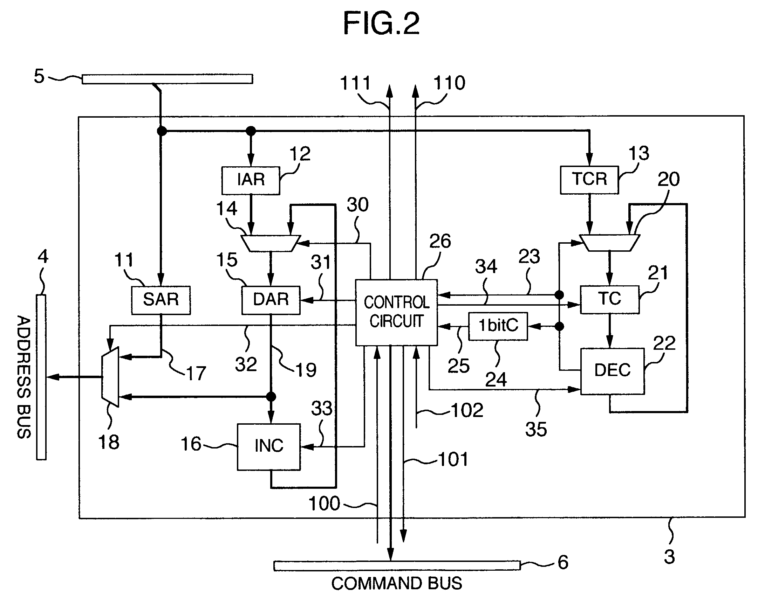

Fig. 2 shows a first example of DMAC 3 specifically dedicated to the single addressing mode in which the transfer source address is fixed and the transfer destination address is sequentially renewed.

In the example shown in Fig. 2, DMAC 3 has a source address register (SAR) 11, an initial address register (IAR) 12 and a transfer number designating register (TCR) 13. These registers can be initially set by CPU 2 via the data bus 5.

A transfer source address is set to SAR 11. A transfer start address of a transfer destination is set to IAR 12. The value set to IAR 12 is loaded in a destination address register (DAR) 15 via a selector 14. The loaded address is incremented by one by an incrementer (INC) 16 each time one data transfer operation is completed. The incremented address is loaded as the next transfer destination address in DAR 15 via the selector 14. A loop made of the selector 14, DAR 15 and INC 16 constitutes a transfer destination address counter.

A transfer source address 17 is output from SAR 11 to the address bus 4 via a selector 18, synchronously with an access timing to the transfer source. A transfer destination address 19 is output from DAR 15 to the address bus 4 via the selector 18, synchronously with an access timing to the transfer destination.

The number of transfer times is initially set as a first target number to TCR 13. The number of transfer times initially set is loaded in a transfer number register (TC) 21 via a selector 20. The loaded transfer number is decremented by one by a decrementer (DEC) 22 each time one data transfer operation is completed, and loaded as the remaining number of transfer times in TC 21 via the selector 20.

Each time the decrement result becomes "0", or in other words, each time the data transfer is performed the first target number, the decrementer 22 sets "1" to a zero signal 23. In the "0" state of the zero signal 23, the selector 20 selects an output from DEC. A loop made of the selector 20, TC 21 and DEC 22 constitutes a transfer number counter for decrementing a count by one each time one transfer operation is performed. When the zero signal 23 is set to "1" during the operation as the transfer number counter, the selector 20 selects the initial value in TCR 13 to reset the value in TC 21 to the initial value and resume the transfer count operation from the initial value.

A one-bit counter (1bitC) 24 counts the number of times when the zero signal 23 is set to "1". In the case of the one-bit counter 24, the initial value is "0" and each time the zero signal 23 is set to "1", the output 25 of the one-bit counter 24 changes alternately between "1" and "0". In other words, when the zero signal 23 is set to "1" at the first time during the initial state (="0") of the signal 25, the signal 25 is set to "1". In this state, when the zero signal 23 is set to "1" at the second time, the signal 25 is initialized to "0". It is therefore possible to know the second time "1" state if the zero signal 23 is set to "1" in the "1" state of the signal 25.

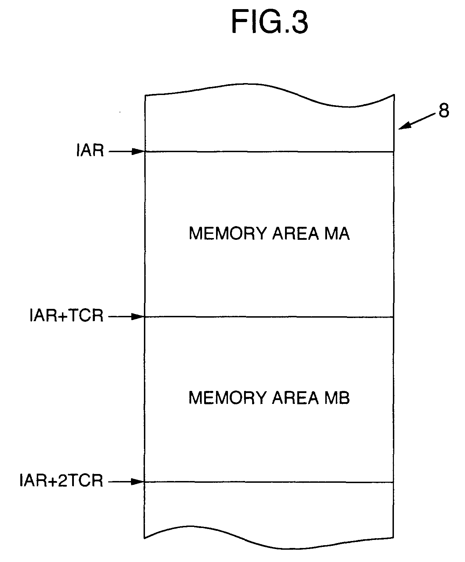

When the signal 25 becomes "1", a control circuit 26 receiving the zero signal 23 and the signal 25 of the one-bit counter 24 sends a signal 30 to the selector 14 to make it select the value in IAR 12 and initialize DAR 15. Therefore, as shown in Fig. 3, each time the data transfer operation is repeated twice each corresponding to the number of transfer times initially set to TCR 13, an address in DAR 15 is reset to the value initially set to IAR 12 so that transfer data corresponding in amount to the number of transfer times initially set to TCR 13 is continuously stored in memory areas MA and MB starting from the initial address in IAR 12.

The control circuit 26 issues an interrupt request each time the zero signal 23 becomes "1" (each time data corresponding in amount to the number of transfer times initially set to TCR 13 is stored in the memory 8). In this case, in order to make it possible to know in which area of the memory areas MA and MB shown in Fig. 3 the data has been stored, when the zero signal 23 becomes "1", the interrupt request signal 110 is asserted if the signal 25 is "0" and the interrupt request signal 111 is asserted if the signal 25 is "1". It is therefore possible for CPU 2 to judge which one of the memory areas MA and MB shown in Fig. 3 is to be accessed. In an actual case, the interrupt controller 10 supplies CPU 2 with interrupt information representative of which one of the memory areas MA and MB was asserted, to thereby allow CPU 2 to determine the memory area to be accessed.

As described previously, upon reception of a transfer request of the transfer request signal 100, the control circuit 26 requests a bus privilege by using the bus privilege signal 101 and acquires the bus privilege based upon the bus privilege acknowledge signal 102 responding to the bus privilege request signal 101, to thereby start a data transfer control operation. For the data transfer control, the control circuit 26 generates a selection control signal 30 for the selector 14, a latch control signal 31 for DAR 15, a select control signal 32 for the selector 18, an increment operation instruction signal 33 for INC 16, a latch signal 34 for TC 21, a decrement operation instruction signal 35 for DEC 22, and the interrupt request signals 110 and 111. The increment operation instruction signal 33 and decrement operation instruction signal 35 are generated each time one operation of transferring data from the transfer source to the transfer destination is performed. Immediately after the increment and decrement operations, the latch control signals 31 and 34 are enabled so that the contents in DAR 15 and TC 21 are renewed in accordance with the increment and decrement operation results.

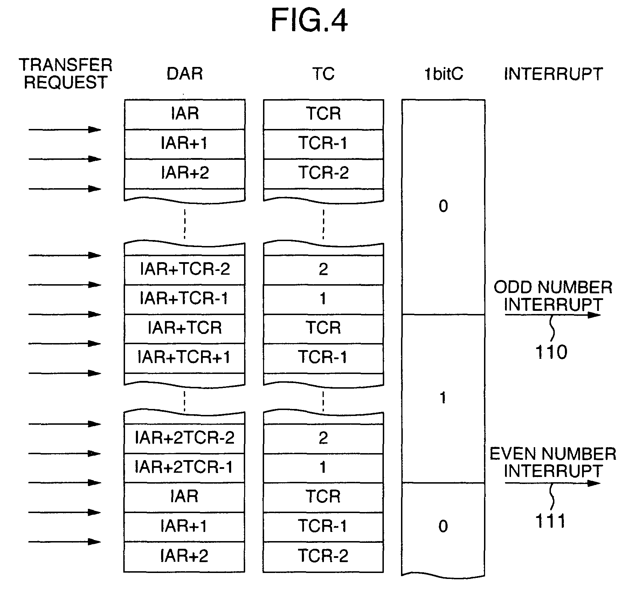

The outline of the data transfer operation by DMAC 3 will be described with reference to Fig. 4.

Each time the control circuit 26 acknowledges a transfer request in response to the transfer request signal 100, the value in DAR 15 is incremented by one from the value in IAR 12. Each time the control circuit 26 acknowledges a transfer request in response to the transfer request signal 100, the value in TC 21 is decremented by one from the value in TCR 13. When the zero signal 23 of DEC 22 becomes "1", TC 21 is initialized by the value in TCR 13. Each time the one-bit counter 24 receives the zero signal 23, it outputs the signal 25 which changes alternately between "0" and "1'. When the zero signal 23 becomes "1" while the output 25 of the one-bit counter 24 takes "1", the value in IAR 12 is loaded in DAR 15 via the selector 14.

As seen from Fig. 4, when the value in TC 21 is decremented to "0" (signal 23 = "1") while the value of the one-bit counter 24 takes "0", the interrupt request signal 110 is asserted. When the value in TC 21 is decremented to "0" (signal 23 = "1") while the value of the one-bit counter 24 takes "1", the interrupt request signal 111 is asserted and the value in DAR 15 is initialized to the value in IAR 12.

In this manner, when data storage in one of the memory areas MA and MB shown in Fig. 3 is completed, a corresponding one of the interrupt request signals 110 and 111 is asserted. CPU 2 can read data from the memory area corresponding to the asserted interrupt request signal via the digital signal processing bus 10, and DSP can perform digital signal processing and the like. In parallel with this operation, in response to a data transfer request from the peripheral circuit 9, DMAC 3 can transfer data to the other memory area.

Each time an interrupt request corresponding to one of the interrupt request signals 110 and 111 is issued twice to CPU 2, DAR 15 is initialized to the transfer start address in IAR 12. Therefore, during the data transfer control cyclically utilizing two data areas MA and MB, CPU 2 is released from a load of setting repetitively the transfer control conditions. In other words, without using a number of continuous data areas and even with limited resources, data transfer and data processing can be continued in parallel without any interruption while releasing CPU 2 from the load of setting repetitively the transfer control conditions.

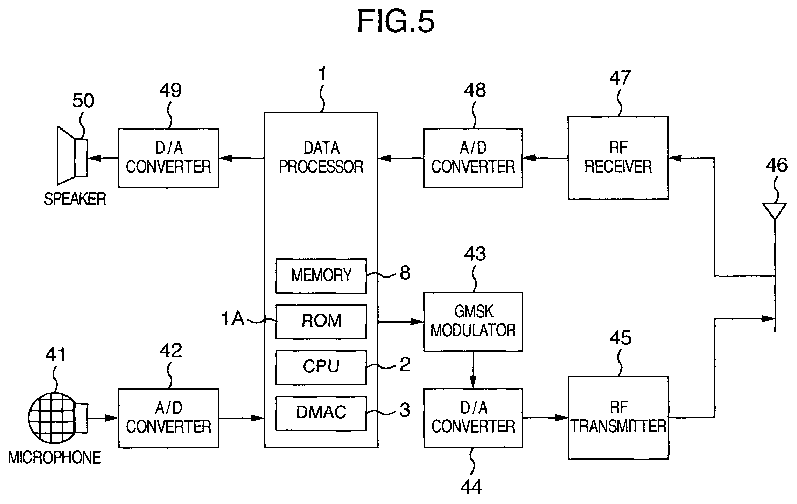

Fig. 5 shows an example of a GSM mobile phone system to which the data processor 1 is applied.

Voices are input as an analog voice signal by a microphone 41, and converted into a digital voice signal by an A/D converter 42 to be input to a data processor 1. The data processor 1 executes a voice encoding process, a channel codec process as a layer process, and the like, respectively for the received digital voice signal, and outputs a processed signal as a transmission signal. The voice encoding process and channel codec process are executed by a DSP although not specifically limited thereto. Although not shown specifically, the data processor 1 may have a built-in accelerator for the channel codec and voice codec.

The transmission signal generated by the data processor 1 is modulated by a GMSK demodulator 43, converted into an analog signal by a D/A converter 44, and transmitted from an antenna 46 via a high frequency transmitter 45.

A reception signal at the antennal 46 is received by a high frequency receiver 47, converted into a digital signal by an A/D converter 48, and supplied to the data processor 1. The data processor 1 executes a Viterbi decoding process, a voice decoding process and the like to derive and output a voice signal. The Viterbi decoding process, voice decoding process and the like are executed by DSP or an accelerator not shown.

The voice signal output from the data processor 1 is converted into an analog voice signal by a D/A converter 49 and output from a speaker 50 as voices.

In the mobile phone system shown in Fig. 5, DMAC 3 built in the data processor 1 can be used when a digital voice signal output from the A/D converter 42 is stored in a memory 8 via SCI of a peripheral circuit 9 and when a reception digital signal output from the A/D converter 48 is stored in the memory 8 via SCI of the peripheral circuit 9.

Although not specifically limited, the data processor 1 in the example shown in Fig. 5 has a ROM 1A for storing operation programs such as for the voice codec process of voice coding and decoding, the channel codec process as the layer process, and a system control process. The process of setting the transfer control conditions of DMAC 3 is performed by CPU 2 while it executes the operation programs stored in ROM 1A.

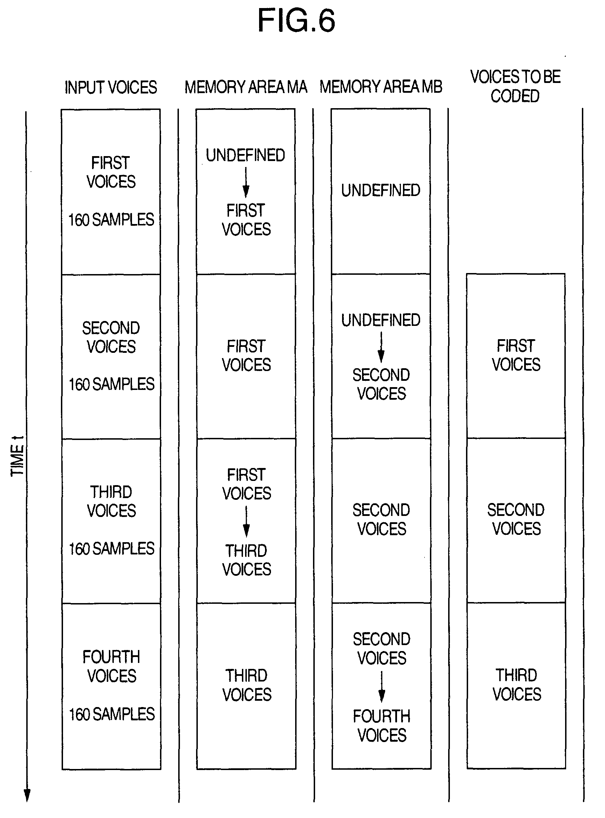

Fig. 6 illustrates an operation of the mobile phone system shown in Fig. 5 in which while a digital voice signal output from the A/D converter 42 is stored in the memory 8 via SCI of the peripheral circuit 9, the digital voice signal is encoded. In the GMSK mobile phone system shown in Fig. 5, the voice signal data is processed in the unit of 160 samples. First, the data of first voices of 160 samples is sequentially stored in the memory area MA of the memory 8. Next, the data of second voices of 160 samples is sequentially stored in the memory area MB of the memory 8.

While the data of second voices 2 is sequentially stored in the memory area MB, CPU 2 reads the data of first voices from the memory area MA and executes the voice encoding process.

While the data of third voices is sequentially stored in the memory area MA, CPU 2 executes the encoding process for the data of second voices stored in the memory area MB. Next, the data of fourth voices is stored in the memory area MB, and in parallel with this operation, CPU 2 reads the data of third voices from the memory area MA and executes the encoding process.

Similarly, voice data is thereafter encoded by alternately switching between the memory area storing received voice data and the memory area for received voice data to be encoded. In this manner, after CPU 2 once sets the data transfer conditions of DMAC 3, CPU can continue voice encoding by alternately utilizing two memory areas MA and MB, without performing a process of setting repetitively the data transfer control conditions for voice data reception.

It is therefore possible to improve an efficiency of the voice encoding by the data processor 1. Namely, since the DMAC 3 side can perform data transfer by automatically switching the data buffers (memory areas of the memory 8), CPU 2 is not required to copy voice data in another buffer area or to perform a process of setting repetitively the transfer conditions of DMAC 3, so that a process efficiency of CPU 2 can be improved. In other words, the data processing amount of CPU 2 can be reduced.

Since the data processing amount of CPU 2 can be reduced, it is possible to lower the operation frequency of CPU 2 and increase an amount of low frequency operation, contributing to a low power consumption of the mobile phone system.

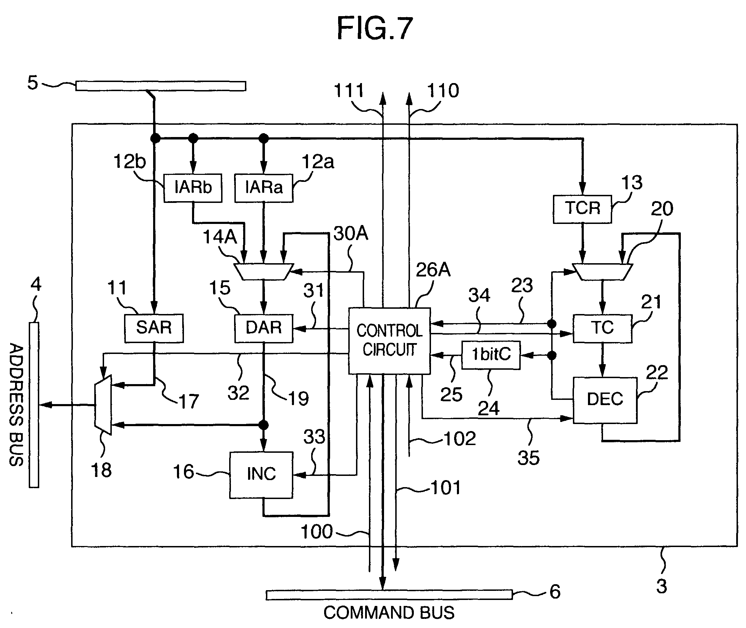

Fig. 7 shows a second example of DMAC 3 specifically dedicated to the single addressing mode in which the transfer source address is fixed and the transfer destination address is sequentially renewed. The different points from the first example shown in Fig. 1 reside in that two initial address registers (IARa and IARb) 12a and 12b are provided and a selector 14A selects either an output of IARa, an output of IARb, or an output of the incrementer 16. In accordance with a control signal 30A generated by a control circuit 26A, the selector 14A selects the output of the incrementer 16 while the zero signal 23 is "0", whereas while the zero signal 23 is "1", the selector 14A selects the output of IARa 12a if the signal 25 is "0" or the output of IARb 12b if the signal 25 is "1".

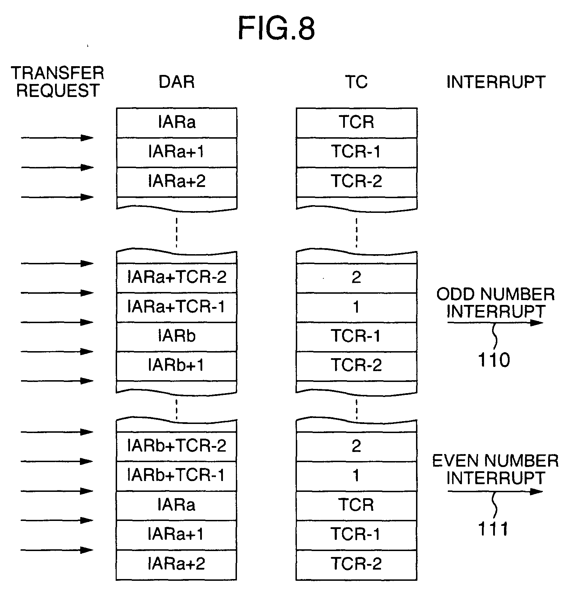

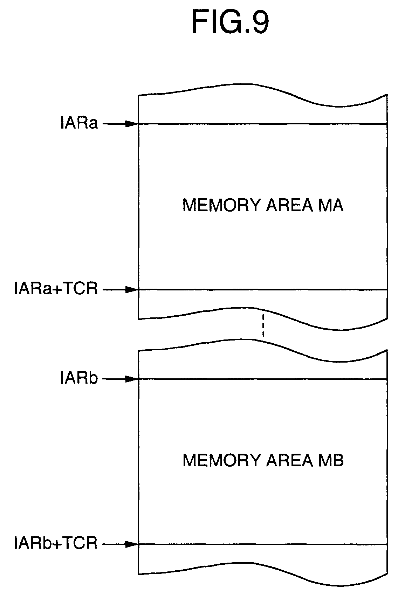

Therefore, each time the zero signal 23 takes "1", the values of IARa 12a and IAR 12b are alternately set to DAR 15. Therefore, as illustratively shown in Fig. 8, it is possible to alternately perform the data transfer operations the number of data transfer times stored as the initial value of TCR 13, starting from the initial value in IARa 12a, and the data transfer operations the number of data transfer times stored as the initial value of TCR 13, starting from the initial value in IARb 12b. Therefore, as illustrated in Fig. 9, two memory areas MA and MB can be reserved at desired locations so that the degree of use area freedom of the memory 8 can be increased.

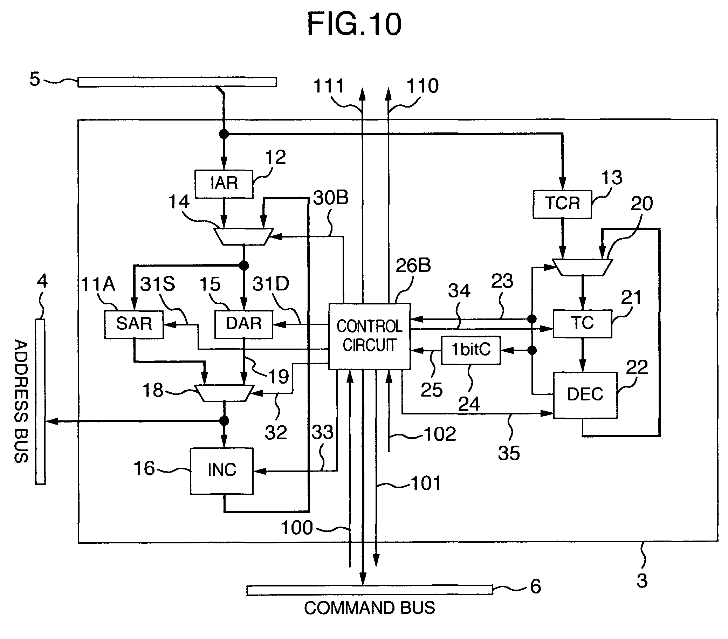

Fig. 10 shows a third example of DMAC 3 specifically dedicated to the single addressing mode in which the two-area buffer can be selected as either the transfer source or the transfer destination. In contrast with the structure shown in Fig. 2, an input to SAR 11A is connected to an output of the selector 14 and a control circuit 26B generates a latch control signal 31D for DAR 15 and a latch control signal 31S for SAR 11A.

If the memory areas MA and MB are used as the transfer destination similar to the control circuit 26 shown in Fig. 1, the control circuit 26B makes the source address loaded in IAR 12 by CPU 2 be latched in SAR 11A by using control signals 30B and 31S. Thereafter, the control circuit 26B makes the destination address initially set to IAR 12 by CPU 2 be latched in DAR 15 by using control signals 30B and 31D, to allow the data transfer similar to that described with Fig. 2.

If the memory areas MA and MB are used as the transfer source, the control circuit 26B first makes the destination address loaded in IAR 12 by CPU 2 be latched in DAR 15 by using the control signals 30B and 31S. Thereafter, the control circuit 26B makes the source address initially set to IAR 12 by CPU 2 be latched in SAR 11A by using the control signals 30B and 31D. Then, each time one data transfer operation is performed, the value in SAR 11A is incremented, and each time the data transfer is performed twice each corresponding to the number of transfer times initially set to TCR 13, the source address initial value in IAR 12 is initialized to the value in SAR 11A. These operations are repeated. Similar to that described with Fig. 2, the interrupt request signals 110 and 111 are asserted each time the data transfer operations corresponding to the number of transfer times initial set to TCR 13 are completed.

With the structure shown in Fig. 10, in the GSM mobile phone system shown in Fig. 5, DMAC 3 can be used when voice data decoded in the data processor 1 and stored in the memory 8 is read from the memory 8 and transferred to the D/A converter 49 via SCI of the peripheral circuit 9, or when transmission data encoded by the data processor 1 and stored in the memory 8 is sequentially read from the memory 8 and supplied to the GMSK modulator 43.

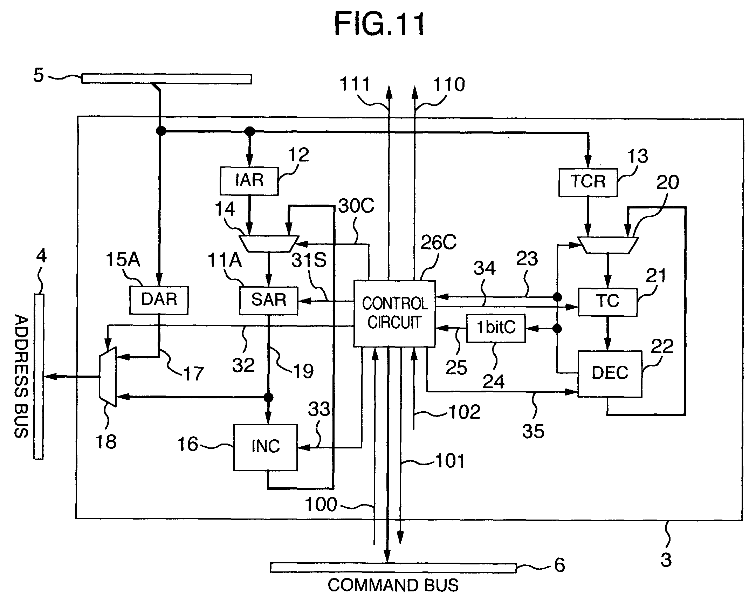

Fig. 11 shows a fourth example of DMAC 3 specifically dedicated to the single addressing mode in which the transfer destination address is fixed and the transfer source address is sequentially renewed. The different points from the structure shown in Fig. 2 reside in that SAR 11A is disposed in the address counter loop and DAR 15A is used as a register capable of being initially set by CPU 2. This structure functions in a similar manner to the case wherein SAR 11A in the structure shown in Fig. 10 is disposed in the address counter loop.

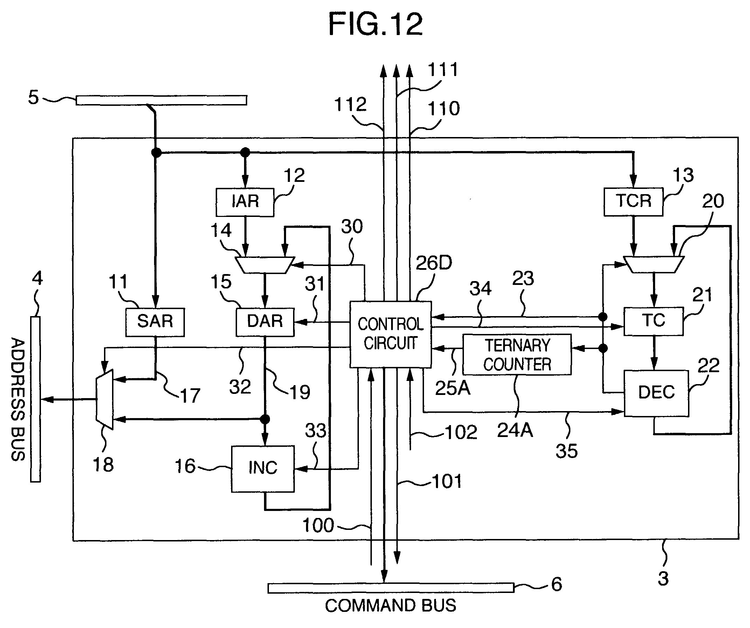

Fig. 12 shows a fifth example of DMAC 3 specifically dedicated to the single addressing mode in which the transfer source address is fixed, the transfer destination address is sequentially renewed, and a three-area buffer is used for data transfer control.

DMAC 3 shown in Fig. 12 is different from that shown in Fig. 2 in that a ternary counter 24A is used in place of the one-bit counter 24A to initialize the value in DAR 15 to the value in IAR 12 each time the zero signal 23 takes "1" three times, and that three interrupt request signals 110, 111 and 112 are used. The interrupt request signal 110 is asserted when the zero signal 23 changes to "1" while the value of the ternary counter 24A takes the initial value "0". The interrupt request signal 111 is asserted when the zero signal 23 changes to "1" while the value of the ternary counter 24A takes "1". The interrupt request signal 112 is asserted when the zero signal 23 changes to "1" while the value of the ternary counter 24A takes "2". If the three-area buffer is to be realized by using the structure shown in Fig. 7, another IAR is used in addition to IARa 12a and IARb 12b to sequentially select three IAR registers by the selector 14A and set the selected value to DAR 15.

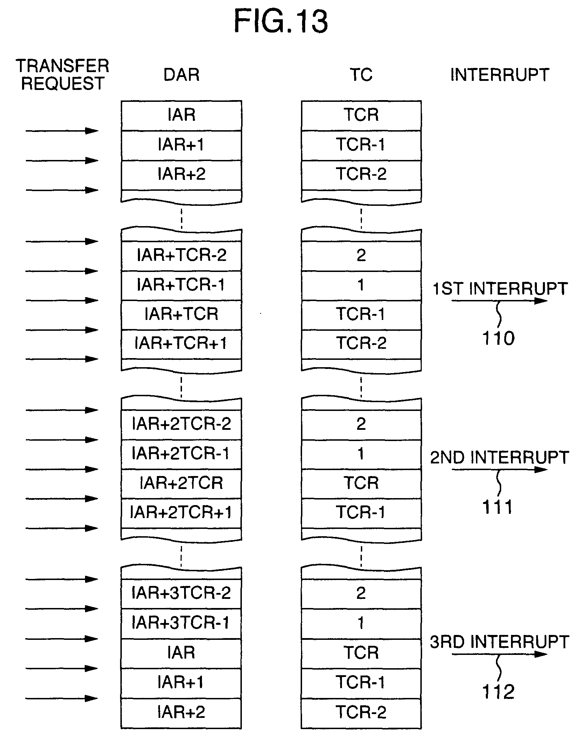

Fig. 13 illustrates an example of the data transfer operation of DMAC shown in Fig. 12. Each time the data transfer operations corresponding to the number of data transfer times initially set to TCR are performed, the interrupt request signals 110, 111 and 112 are sequentially asserted. When the data transfer operations are repeated three times each corresponding to the number of data transfer times initially set to TCR, the destination address in DAR 15 is initialized to the value set to IAR.

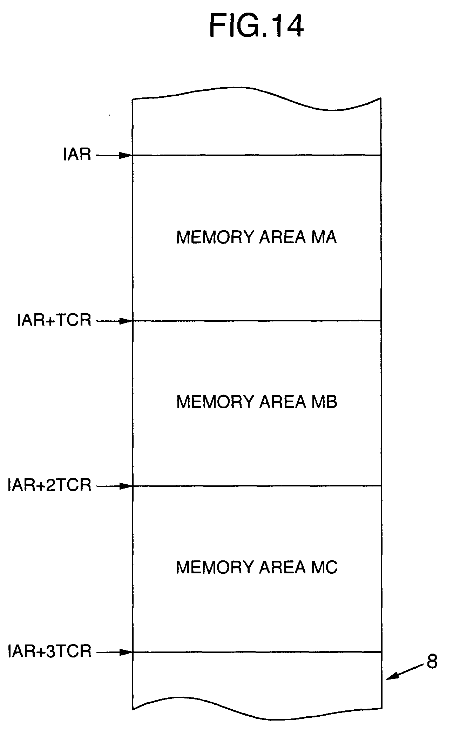

Therefore, as illustratively shown in Fig. 14, a data transfer operation using a three-area data buffer (three memory areas MA, MB and MC) can be performed by using each data area having a capacity corresponding to the number of data transfer times initially set to TCR.

With the structure of DMAC shown in Fig. 12 allowing to use three buffer areas MA, MB and MC, while data is transferred to one data area, data already transferred to and stored in the two data areas can be processed. This arrangement provides the following advantage. For example, in a short term prediction process using encoding coefficients of voice data in each data area, when data in the data area is to be encoded, it is necessary to use some data in one preceding data area already encoded. In such a case, if the data in the two data areas including the data area already encoded is left, data necessary for the short term prediction process can be reliably acquired.

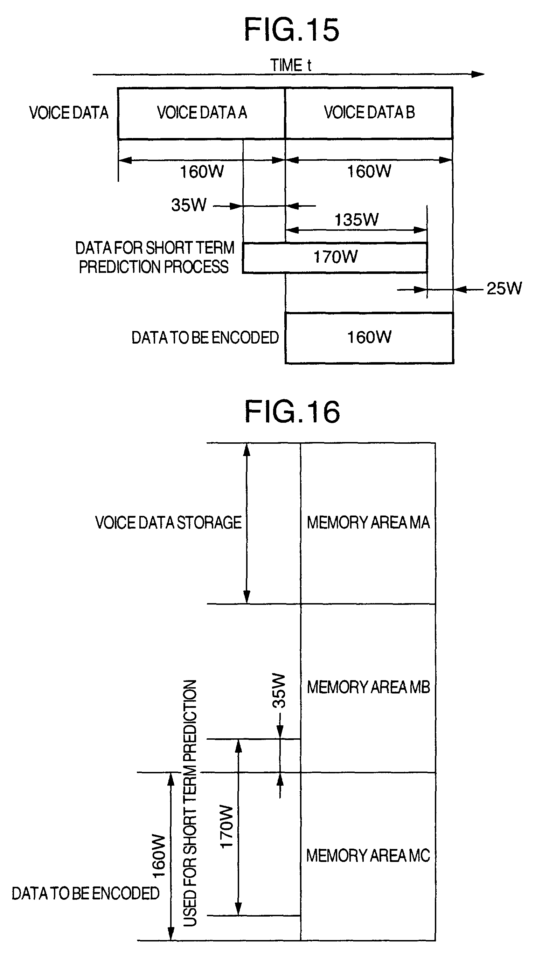

This advantage will be further detailed. As a GSM voice coding process, as shown in Fig. 15 a short term prediction process is known by which coefficients necessary for encoding voice data B (160 samples = 160 W) are calculated. This short term prediction process requires data of the last 35 samples (35 W) of voice data A already encoded and immediately before the voice data B.

It is assumed that a two-area buffer is used. In this case, while the voice data B is encoded, next voice data C is sequentially transferred to the memory area of the voice data A already encoded. If some of the voice data A necessary for the short term prediction process is overwritten before the prediction process for encoding the voice data B is completed, the short term prediction process necessary for encoding the voice data B can be completed no more.

If the three-area buffer having the memory areas MA, MB and MC can be used, as illustratively shown in Fig. 16, while voice data in the memory area MC is encoded, data is transferred from DMAC 3 to the memory area MA and the data necessary for the short term prediction process for encoding the voice data is perfectly stored in the memory area MB immediately before the memory area MC. It is therefore possible to prevent new voice data from overwriting the data in the memory area MB.

The invention made by the present inventor has been described specifically with reference to the embodiments. The invention is not limited only to those embodiments, but various modifications are possible without departing from the scope of the invention.

For example, it is not limited that DMAC is built in the data processor, but a discrete DMAC may be realized as a semiconductor integrated circuit. In this case, a memory may be formed in the circuit as a buffer RAM. Alternatively, the buffer RAM may be formed on another semiconductor substrate to realize a MCP (multi-chip package) with the data processor and the memory being sealed in one package. A data processor with a built-in DMAC may also have a cache memory, a memory management unit and other peripheral circuits. A data processor using an external memory as a main memory may also be used. An address counter of DMAC is not limited only to an increment type but a decrement type may also be used. Conversely, a transfer counter is not limited only to a decrement type but an increment type may also be used. Although the dual addressing mode is not described in particular, it is obvious that DMAC may have a dual addressing mode.

The application of the invention is not limited to the mobile phone system, but the invention may be applied to various fields including other voice processing systems, multi-media systems, graphics systems utilizing motion compensation, portable information processing terminals, set-top box (STB) and the like. It is preferable to use a buffer having four or more memory areas if the invention is applied to image processing, particularly moving image processing for a graphics system and a set-top box. In this case, the initial address registers (IARa, IARb) shown in Fig. 7 are provided as many as the number of memory areas, or a counter matching the number of memory areas is used in place of the ternary counter 24A shown in Fig. 12. The size of each memory area is selected so as to be suitable for the motion image processing. It is obvious that memory areas and the data transfer controller of this invention may be provided independently for the voice processing and image processing.

The effects obtained by the typical aspects of the invention will be briefly described in the following.

It is possible to reduce the control load of CPU and the like necessary for data transfer cyclically using a plurality of data transfer areas.

A CPU load of setting repetitively the data transfer conditions can be reduced during a series of processes of sequentially storing received data in a memory or the like and each time data of a predetermined amount is stored, using data already stored in parallel with an operation of storing next data.

A data processing efficiency of a data processing system can be improved, the system performing a series of processes of sequentially storing received data in a memory or the like and each time data of a predetermined amount is stored, using data already stored in parallel with an operation of storing next data.

Data transfer can be performed by automatic switching of the data area by the data transfer controller. Therefore, the arithmetic and logic controller such as a CPU is not necessary to setting repetitively the data transfer conditions of the data transfer controller and the data processing amount of an arithmetic and logic controller can be reduced.

Since the data processing amount of an arithmetic and logic controller can be reduced, the operation frequency of the controller can be lowered, contributing to the low power consumption of the data processing system.

## Claims

1. A data transfer controller comprising:
an initial value register (12, 13), a transfer start address of a transfer source or transfer destination being initially set to said initial value register from an external; and
a control unit (3) which requests an interrupt to the external each time data transfer responding to a transfer request from the external reaches a predetermined data amount based upon the transfer start address, and initializes an address of the transfer source or transfer destination to the transfer start address in said initial value register each time the interrupt is issued a plurality of predetermined times.

2. A data processor comprising an arithmetic and logic controller (2) and a data transfer controller (3) formed on a semiconductor chip, wherein said arithmetic and logic controller initially sets a transfer start address of a transfer source of transfer destination to said data transfer controller, and said data transfer controller requests an interrupt to said arithmetic and logic controller each time data transfer responding to a transfer request from the transfer source reaches a predetermined data amount based upon the transfer start address, and initializes an address of the transfer source or transfer destination to the transfer start address each time the interrupt is issued a plurality of predetermined times.

3. A data processing system comprising an arithmetic and logic controller (2), a data transfer controller (3) whose transfer control conditions are set by said arithmetic and logic controller, a RAM (8) accessible by said arithmetic and logic controller and said data transfer controller, and a peripheral circuit (9) which issues a transfer request to said data transfer controller, wherein:
said data transfer controller requests an interrupt to said arithmetic and logic controller each time data transfer to said RAM responding to a transfer request from the said peripheral circuit reaches a predetermined data amount based upon a transfer start address of said RAM indicated by the transfer control conditions set by said arithmetic and logic controller, and initializes an address of the transfer source or transfer destination to the transfer start address each time the interrupt is issued a plurality of predetermined times; and
after the interrupt from said data transfer controller is acknowledged, said arithmetic and logic controller reads data transferred to said RAM before the interrupt is issued, and performs data processing.

4. A data transfer controller comprising:
an initial value register (12, 13) capable of being externally set with transfer control address information;
an address counting unit (14, 15, 16) which renews the transfer control address information each time data is transferred from a transfer source to a transfer destination;
a temporary address register (21) to which the transfer control address information set to said initial value register is set, the set transfer control address information being sequentially renewed by said address counting means;
a transfer number counting unit (14, 15, 16) capable of repetitively performing an operation of counting the number of transfer times up to a first target number each time data is transferred from the transfer source to the transfer destination;
a repetition number counting unit (20, 21, 22) capable of repetitively performing an operation of counting the number of repetition times of the operation of said transfer number counting unit which counts the number of transfer times up to the first target number, up to a second target number; and
a control unit (26) which starts a data transfer operation from the transfer source to the transfer destination in response to a data transfer request, outputting an interrupt signal each time said transfer number counting unit counts the first target number, and setting the transfer control address information to said temporary register from said initial value register each time said repetition number counting unit counts the second target number.

5. A data transfer controller according to claim 4, wherein:
said temporary address register is a destination address register for storing a transfer destination address;
said initial value register is an initial address register to which a start address of the transfer destination is set; and
said control unit is capable of starting a data transfer control of storing data at the transfer source address in the transfer destination at a transfer destination address in the destination address register, in response to the data transfer request.

6. A data transfer controller according to claim 4, wherein:
said temporary address register is a source address register for storing a transfer source address;
said initial value register is an initial address register to which a start address of the transfer source is set; and
said control unit is capable of starting a data transfer control of storing data at the transfer source address in the source address register in the transfer destination at a transfer destination address, in response to the data transfer request.

7. A data transfer controller according to claim 4, further comprising a source address register for storing a transfer source address and a destination register for storing a transfer destination address, wherein:
said control unit can select either said source address register or said destination address register as said temporary address register and can start a data transfer control by using the register selected as said temporary register, in response to the data transfer request.

8. A data transfer controller according to any one of claims 4 to 7, further comprising a transfer number designation register capable of being externally set with the first target number.

9. A data transfer controller according to any one of claims 4 to 7, wherein the second target number is three.

10. A data transfer controller according to any one of claims 1 to 9, further comprising a RAM usable as the transfer source or the transfer destination.

11. A data transfer controller comprising:
a plurality of initial value registers (12, 13) each capable of being externally set with transfer control address information;
an address counting circuit (14, 15, 16) which renews the transfer control address information each time data is transferred from a transfer source to a transfer destination;
a selecting circuit (18) capable of selecting the transfer control address information stored in one of a plurality of said initial value registers;
a temporary address register (21) to which the transfer control address information selected by said selecting circuit is set, the set transfer control address information being sequentially renewed by said address counting circuit;
transfer number counting circuit (14, 15, 16) capable of repetitively performing an operation of counting the number of transfer times up to a first target number each time data is transferred from the transfer source to the transfer destination;
a repetition number counting circuit (20, 21, 22) capable of repetitively performing an operation of counting the number of repetition times of the operation of said transfer number counting circuit which counts the number of transfer times up to the first target number, up to a second target number; and
a control circuit (26) which starts a data transfer operation from the transfer source to the transfer destination in response to a data transfer request, outputs an interrupt signal each time said transfer number counting means counts the first target number, makes said selecting circuit select said initial value register in accordance with a count of said repetition number counting circuit, and sets the transfer control address information in the selected initial register to said temporary register.

12. A data processor comprising an arithmetic and logic controller (2) and a data transfer controller (3) to which transfer control conditions are set by said arithmetic and logic controller, wherein said data transfer controller comprises:
an initial value register (12, 13) capable of being set with transfer control address information by said arithmetic and logic controller;
an address counting circuit (14, 15, 16) which renews the transfer control address information each time data is transferred from a transfer source to a transfer destination;
a temporary address register (21) to which the transfer control address information set to said initial value register is set, the set transfer control address information being sequentially renewed by said address counting means;
a transfer number counting circuit (14, 15, 16) capable of repetitively performing an operation of counting the number of transfer times up to a first target number each time data is transferred from the transfer source to the transfer destination;
a repetition number counting circuit (20, 21, 22) capable of repetitively performing an operation of counting the number of repetition times of the operation of said transfer number counting circuit for counting the number of transfer times up to the first target number, up to a second target number; and
a control circuit (26) which starts a data transfer operation from the transfer source to the transfer destination in response to a data transfer request, outputs an interrupt signal each time said transfer number counting circuit counts the first target number, and sets the transfer control address information in the initial register to said temporary register.

13. A data processor according to claim 12, further comprising a RAM accessible by said arithmetic and logic controller and said data transfer controller, said arithmetic and logic controller, said data transfer controller and said RAM being formed in a single semiconductor chip.

14. A data processor according to claim 13, further comprising a peripheral input/output circuit accessible by said arithmetic and logic controller and said data transfer controller, said peripheral input/output circuit being capable of outputting the data transfer request to said data transfer controller.

15. A data processing system comprising a data processor recited in claim 14 and a voice signal input circuit (41, 42) connected to said peripheral input/output circuit of the data processor, wherein:
the data processor stores an operation program for said arithmetic and logic controller;
in accordance with the operation program, said arithmetic and logic controller sets transfer conditions to said data transfer controller, the transfer conditions being used when a voice signal input from said voice signal input circuit to said peripheral input/output circuit is transferred to said RAM;
said data transfer controller controls to transfer the voice signal to said RAM in response to the data transfer request from said peripheral input/output circuit; and
when an interrupt signal is received from said data transfer controller, said arithmetic and logic controller read the voice signal from said RAM and processes the read voice signal.
